# EUROPÄISCHE PATENTANMELDUNG

(11) **EP 2 624 010 A1**
(43) Veröffentlichungstag der Anmeldung: **07.08.2013**
(21) Anmeldenummer: 12194045.6
(22) Anmeldetag: 23.11.2012
(51) Int. Cl.: G01S 17/10, G01S 7/28

(54) **Signallaufzeitmessung**

(30) Priorität: 01.02.2012 DE 102012100813
(71) Anmelder: SICK AG, 79183 Waldkirch (DE)
(72) Erfinder: Zwölfer, Ulrich, 79183 Waldkirch (DE)
(74) Vertreter: Hehl, Ulrich

(57) **Zusammenfassung**

Es wird ein Messkern (10) für eine Signallaufzeitmessung mit einer Sendereinheit (12) zur Erzeugung eines Sendepulses (14) zu einem Sendezeitpunkt (t₁), einer Empfängereinheit (16) zur Verarbeitung eines Empfangssignals (18) sowie einer Auswertungseinheit (26) angegeben, die dafür ausgebildet ist, aus dem Empfangssignal (18, 24) einen Empfangszeitpunkt (t₂) und somit die Signallaufzeit (t₂-t₁) zwischen Sendezeitpunkt (t₁) und Empfangszeitpunkt (t₂) zu bestimmen, wobei weiterhin eine Ausblendeinheit (20) vorgesehen ist, um ein zeitliches Ausblendfenster (22) mit einem definierten Zeitbezug zu dem Sendezeitpunkt (t₁) festzulegen und in dem Empfangssignal (18) einen durch das Ausblendfenster (22) bestimmten Teilbereich (t_{S}) des Empfangssignals (18) auszublenden. Dabei ist die Ausblendeinheit (20) auf einem digitalen Baustein (28) implementiert, insbesondere einem FPGA, der einen digitalen Clockmanager (30) aufweist, in dem Takte (34, 36) mit vorgebbarer Phase erzeugbar sind, und die Ausblendeinheit (20) ist dafür ausgebildet, das Ende des Ausblendfensters (22) aus einem anhand des gewünschten Endzeitpunkts (T_{A2}) des Ausblendfensters gegenüber dem Sendezeitpunkt (t₁) phasenverschobenen ersten Takt (34) des digitalen Clockmanagers (30) zu erzeugen.

## Beschreibung

Die Erfindung betrifft einen Messkern für eine Signallaufzeitmessung sowie ein Verfahren zu Signallaufzeitmessung nach dem Oberbegriff von Anspruch 1 beziehungsweise 11.

Zahlreiche Sensoren nutzen ein Signallaufzeitprinzip, bei dem das Zeitintervall zwischen Senden und Empfang eines Signals über die Signallaufzeit in eine Entfernung umgerechnet wird. Dabei werden so verschiedene Frequenzbereiche des elektromagnetischen Spektrums ausgenutzt wie Mikrowellen und Licht.

Bei optoelektronischen Sensoren nach dem Prinzip des Lichtlaufzeitverfahrens wird bei einem Pulslaufzeitverfahren ein kurzer Lichtpuls ausgesendet und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist.

Optoelektronische Entfernungsmessung kann beispielsweise in der Fahrzeugsicherheit, der Logistik- oder Fabrikautomatisierung oder der Sicherheitstechnik benötigt werden. Insbesondere kann ein Entfernungsmesser, der auf einem reflektierten Lichtstrahl basiert, auf eine Entfernungsänderung des Reflektors oder des reflektierenden oder remittierenden Ziels reagieren. Eine besondere Anwendung ist eine Reflexionslichtschranke, bei welcher der Abstand zwischen Lichtsender und Reflektor überwacht wird. Das Lichtlaufzeitverfahren ist auch das Prinzip, nach dem entfernungsmessende Laserscanner arbeiten, deren Fahrstrahl eine Ebene oder einen Raumbereich ausmisst.

Ein Anwendungsbereich für Mikrowellen ist die Füllstandsmessung. Hierbei wird die Signallaufzeit bis zur Reflexion an einer Grenzfläche des Mediums bestimmt, dessen Füllstand zu messen ist. Dabei werden die abgestrahlten Mikrowellen in einer Sonde geführt (TDR, time domain reflectometry), oder alternativ wie bei einem Radar frei abgestrahlt und von der Grenzfläche reflektiert.

In dem Empfangssignal eines solchen Sensors finden sich außer dem Nutzsignal auch Störanteile. Dazu zählen zusätzliche Empfangspulse oder Echos, die nicht von dem zu vermessenden Objekt stammen, sondern die Störungen beispielsweise aufgrund von Kopplungen, einem Frontscheibenreflex oder einer Verschmutzung sind. Diese Art von Störungen ist oft auf der Messstrecke lokalisierbar und hat daher einen konstanten Zeitbezug zum Sendezeitpunkt des Sendepulses. Es ist also möglich, ein bestimmtes Zeitfenster auf dem Empfangssignal auszublenden, um diese Störanteile zu entfernen.

Dazu werden stabile Verzögerungen benötigt, um das Ausblendfenster gegenüber dem Sendezeitpunkt auszurichten. Bei einer angestrebten Genauigkeit der Entfernungsmessung im Bereich einiger zehn Millimeter, muss die Signallaufzeit aufgrund der Lichtgeschwindigkeit in einer Größenordnung von hundert Pikosekunden genau bestimmt werden. Um eine Distanzauflösung von einem Millimeter zu erreichen, müssen sogar nur sechs Pikosekunden messtechnisch erfasst werden. Entsprechende Genauigkeiten sind deshalb auch für die Lage des Ausblendfensters und damit die zu erzeugenden Verzögerungen erwünscht. Die Verzögerungen im Pikosekundenbereich sollen zudem über Veränderungen in Prozess, Temperatur und Spannung stabil bleiben.

Im Stand der Technik werden die Verzögerungen durch Analogdelays beziehungsweise zeitdiskrete, getaktete Synchronschaltungen realisiert. Solche Schaltungen haben aber Nachteile wie hohe Kosten, starke Temperaturabhängigkeiten oder eine nur grobe Quantisierung. Beispielsweise entspricht ein Arbeitstakt von 100 MHz einer Signallaufzeit von 10 ns oder 1,5 Meter, so dass klar ist, dass mit einem solchen Arbeitstakt die geforderte Präzision der Ausblendfenster verfehlt wird.

Es ist daher Aufgabe der Erfindung, auf einfache Weise Ausblendfenster mit hoher zeitlicher Präzision für eine Signallaufzeitmessung zur Verfügung zu stellen.

Diese Aufgabe wird durch einen Messkern für eine Signallaufzeitmessung nach Anspruch 1 sowie ein Verfahren zu Signallaufzeitmessung nach Anspruch 11 gelöst. Dabei geht die Erfindung von dem Grundgedanken aus, für die Zeitbezüge des Ausblendfensters bereits vorhandene Standardelemente des digitalen Baussteins zu nutzen. Insbesondere auf einem FPGA (Field Programmable Gate Array) sind bereits hoch performante Taktgeneratoren als sogenannte digitale Clockmanager (DCM) vorgesehen, die sich die Erfindung für die Erzeugung von Ausblendfenstern zu Nutze macht. Aus dem hochgenauen und stabilen Phasenbezug von dessen Takten wird die zeitliche Lage des Ausblendfensters abgeleitet. So kann ein Störer an einer zeitlich genau bestimmten Position ausgeblendet werden, so dass also der Einfluss von Störern innerhalb des Ausblendfensters ignoriert wird, beispielsweise indem der Empfangspegel innerhalb des Ausblendfensters auf Null gesetzt wird.

Die Erfindung hat den Vorteil, dass aus vorhandenen Elementen des digitalen Bausteins auf besonders kostengünstige Weise stabile Zeitbezüge erzeugt werden. Maßnahmen des digitalen Bausteins und von dessen digitalem Clockmanager, um Stabilität gegenüber Veränderungen in Prozess, Temperatur oder Spannung zu erreichen, können einfach mitgenutzt werden. Dafür bedarf es also im Gegensatz zu herkömmlichen Lösungen weder der Entwicklung noch der Herstellung entsprechender Schaltungen. Gleichzeitig besteht volle Flexibilität hinsichtlich der Lage und Länge des Ausblendfensters.

Die Ausblendeinheit weist mindestens einen Taktflankendetektor auf, um aus dem ersten Takt ein Ausblendrechtecksignal zu erzeugen, das mit dem Sendezeitpunkt beginnt und mit einer Flanke des ersten Taktes endet und so dem Ausblendfenster entspricht. So entsteht als Zwischensignal das Ausblendrechtecksignal, das seinen Pegel genau an der gewünschten zeitlichen Position des Ausblendfensters wechselt.

Die Ausblendeinheit ist bevorzugt dafür ausgebildet, den Anfang des Ausblendfensters aus einem anhand des gewünschten Startzeitpunkts des Ausblendfensters gegenüber dem Sendezeitpunkt phasenverschobenen zweiten Takt des digitalen Clockmanagers zu erzeugen. Bei Verwendung allein eines ersten Takts ist nur das Ende des Ausblendfensters einstellbar und der Beginn des Ausblendfensters an den Sendezeitpunkt gekoppelt. Durch einen zweiten Takt kann auch der Beginn des Ausblendfensters gewählt und somit ein Ausblendfenster an beliebiger Position innerhalb des Empfangsignals und mit beliebiger Länge eingestellt werden.

In einer weiteren Ausführungsform ist auch möglich, durch Verwendung weiterer oder derselben Takte mehrere Ausblendfenster zu realisieren. Das kann nützlich sein, wenn der zu vermessende Empfangspuls möglicherweise zwischen zwei Störbereichen liegt, wo man nicht den gesamten Bereich zwischen den Störern in einem einzigen großen Ausblendfenster erfassen und damit auch das mögliche Nutzsignal ausblenden möchte.

Auch bei Verwendung eines zweiten Taktes zur Festlegung des Beginns des Ausblendfensters weist die Ausblendeinheit bevorzugt mindestens einen Taktflankendetektor auf, um aus dem ersten Takt und dem zweiten Takt ein Ausblendrechtecksignal zu erzeugen, das mit einer Flanke des zweiten Taktes beginnt und mit einer Flanke des ersten Taktes endet und so dem Ausblendfenster entspricht. So entsteht wiederum als Zwischensignal das Ausblendrechtecksignal nun mit variabler Anfangsposition des Ausblendfensters.

Die Ausblendeinheit weist bevorzugt ein UND-Gatter auf, um das Ausblendrechtecksignal und das Empfangssignal mit einem logischen UND zu verknüpfen und so in dem Empfangssignal den durch das Ausblendfenster bestimmten Teilbereich auszublenden. Dadurch wird mit einer ganz einfachen Verschaltung, die in sich stabil gegen äußere Änderungen ist, das Empfangssignal innerhalb des gewünschten Ausblendbereichs auf den Pegel Null gesetzt. Je nach Verarbeitungsstrategie sind Negationen des Empfangssignals wie des Ausblendrechtecksignals möglich, so dass effektiv ein ODER-Gatter gebraucht wird. Das entspricht dann aber funktional einer UND-Verknüpfung und wird hier deshalb sprachlich nicht unterschieden.

Der Taktflankendetektor weist bevorzugt mindestens ein Flipflop auf. Auch damit kann die Schaltung einfach gehalten werden, und Flipflops sind ebenso wie UND-Gatter ohne jegliche Maßnahmen hinreichend stabil gegenüber äußeren Änderungen.

Der digitale Clockmanager weist bevorzugt eine Regelung auf, insbesondere auf Basis von PLLs, und erzeugt somit gegenüber Veränderungen in Prozess, Temperatur und/oder Spannung stabile Takte. Damit sind die Takte, aus denen das Ausblendfenster erzeugt wird, unter beliebigen äußeren Bedingungen stabil. Sofern in der weiteren Verschaltung wie in den letzten Absätzen nur Elemente verwendet werden, die ebenso stabil bleiben, bleibt somit die Ausblendung bei äußeren Änderungen völlig stabil. Dazu muss keine Zusatzmaßnahme ergriffen werden, wenn der digitale Clockmanager des verwendeten digitalen Bausteins die erforderliche Regelung schon mitbringt.

In dem digitalen Clockmanager sind vorzugsweise Takte mit einer hochgenau vorgegebenen Phase insbesondere im Bereich von Pikosekunden erzeugbar. Damit werden auch Signallaufzeitbestimmungen unterstützt, die Entfernungen mit Genauigkeiten im Bereich von Millimetern messen.

Auch die Auswertungseinheit ist bevorzugt auf dem digitalen Baustein implementiert. Damit wird auch für die eigentliche Signallaufzeitmessung kein zusätzliches Element benötigt.

Vorzugsweise wird ein optoelektronischer Sensor, insbesondere Entfernungstaster oder Laserscanner, mit einem erfindungsgemäßen Messkern ausgerüstet. Derartige Sensoren sind sehr verbreitet. Als ein weiteres Beispiel für eine alternative Einsatzmöglichkeit wird der Messkern in einem Mikrowellen-Sensor, insbesondere einem frei abstrahlenden Füllstandssensor nach dem Radarprinzip oder TDR-Füllstandssensor eingesetzt.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: ein schematisches Blockschaltbild eines Messkerns für die Signalverarbeitung;
- Fig. 2: ein schematisches Blockschaltbild einer Schaltungsanordnung zur Generierung eines Empfangssignal mit Ausblendfenster aus den Takten eines digitalen Clockmanagers (DCM); und
- Fig. 3: beispielhafte zeitliche Signalverläufe in verschiedenen Verarbeitungsstufen der Schaltungsanordnung gemäß Figur 3.

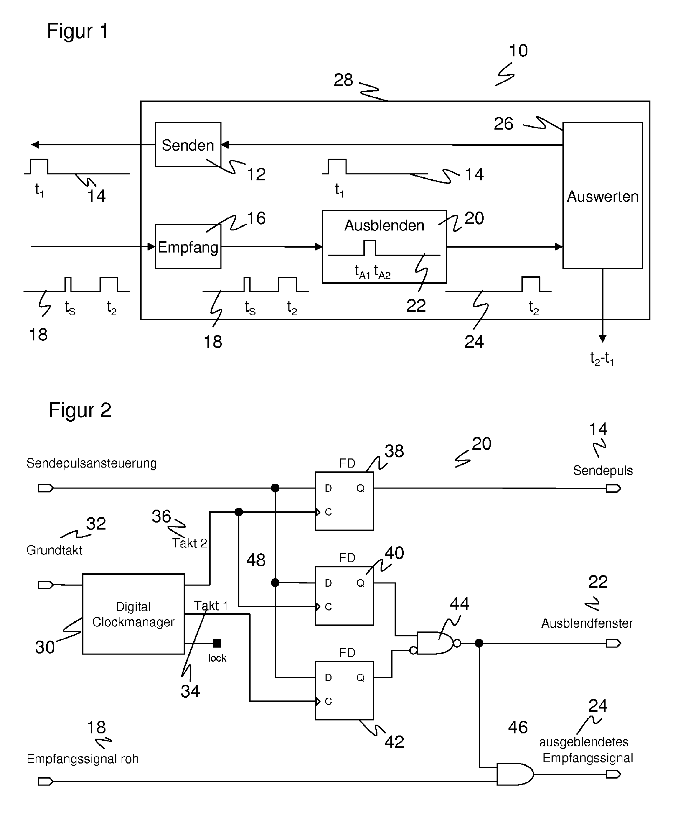

Figur 1 zeigt ein schematisches Blockschaltbild eines Messkerns 10 in einer Ausführungsform der Erfindung. Ein solcher Messkern 10 kann beispielsweise in einem der einleitend genannten optoelektronischen Sensoren zur Entfernungsmessung oder in einem mikrowellenbasierten Füllstandssensor eingesetzt werden.

Der Messkern 10 weist eine Sendeeinheit 12 auf, die einen Sendepuls 14 zu einem Sendezeitpunkt t₁ zur Verfügung stellt. Einer Empfangseinheit 16 wird ein auf den Sendepuls 14 hin entstehendes Empfangssignal 18 zugeführt. Das Empfangssignal 18 enthält einen Empfangspuls von einem Messobjekt zu einem Empfangszeitpunkt t₂ sowie einen beispielhaften Störpuls zu einem Zeitpunkt t_{S}. In einem Sensor wird beispielsweise der Sendepuls 14 durch eine LED, eine Laserdiode beziehungsweise einen Mikrowellensender abgestrahlt. Das nach Reflexion oder Remission an einem Messobjekt oder einer Messoberfläche entstehende Signal wird von einer Photodiode beziehungsweise einem Mikrowellenempfänger empfangen und in das elektrische Empfangssignal 18 umgewandelt.

In einer Ausblendeinheit 20 wird das Empfangssignal 18 mit einem Ausblendsignal 22 verrechnet, das ein zu einem Zeitpunkt T_{A1} beginnendes und zu einem Zeitpunkt T_{A2} endendes Ausblendfenster definiert. Vorzugsweise ist die Lage des Ausblendfensters so gewählt, dass dessen zeitliche Lage einem bekannten Störer entspricht, in dem Beispiel also den Störpuls zum Zeitpunkt t_{S} umfasst. Die zeitliche Lage des Störers ist beispielsweise im Falle eines Frontscheibenreflexes vorab bekannt. Alternativ kann sie aber auch in dem Messkern 10 bestimmt und das Ausblendfenster entsprechend adaptiert werden.

Nach der Ausblendung in der Ausblendeinheit 20 ist der Empfangspegel innerhalb des Ausblendfensters auf Null gesetzt, so dass in dem entstandenen ausgeblendeten Empfangssignal 24 der Störpuls zum Zeitpunkt T_{S} eliminiert ist.

Das ausgeblendete Empfangssignal 24 wird einer Auswertungseinheit 26 zugeführt. Dort wird daraus der Empfangszeitpunkt t₂ gewonnen. Die Auswertungseinheit 26 ist auch zumindest mittelbar mit der Sendeeinheit 12 verbunden, um dort das Aussenden des Sendesignals 14 zum Sendezeitpunkt t₁ auszulösen. Alternativ wird das Sendesignal 14 der Auswertungseinheit 26 ebenfalls zugeführt, um daraus auch den Sendezeitpunkt t₁ zu bestimmen. In beiden Fällen ist die Auswertungseinheit nun in der Lage, die Signallaufzeit t₂-t₁ zu berechnen und auszugeben. Zusätzliche Berechnungen in der Auswertungseinheit 26 sind denkbar, etwa ist die Umrechnung auf eine Distanz über die Lichtgeschwindigkeit oder die Berücksichtigung interner Signallaufzeiten möglich.

Der Messkern 10 ist auf einem einzigen digitalen Baustein 28 implementiert, vorzugsweise einem FPGA. Alternativ kann die Auswertungseinheit 26 entgegen der Darstellung der Figur 1 zumindest teilweise auf einem eigenen Baustein implementiert sein, beispielsweise einem Mikroprozessor.

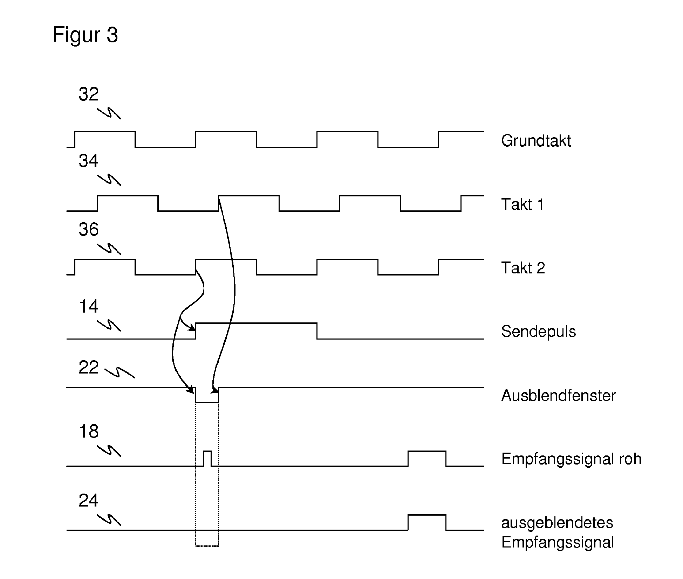

Wie im Folgenden anhand der Figuren 2 und 3 erläutert, nutzt die Ausblendeinheit 20 einen digitalen Clockmanager 30 des digitalen Bausteins 28, um die Zeitbezüge für das Ausblendfenster mit einer Präzision im Bereich von höchstens einigen Pikosekunden zu erzeugen. Dabei zeigt Figur 2 ein schematisches Blockschaltbild einer beispielhaften Schaltungsanordnung der Ausblendeinheit 20 und Figur 3 beispielhafte zeitliche Signalverläufe in verschiedenen Verarbeitungsstufen der Schaltungsanordnung. Gleiche Bezugszeichen bezeichnen dabei in der gesamten Beschreibung die gleichen oder einander entsprechenden Merkmale.

Die Eingänge der Schaltungsanordnung von Figur 2 sind eine Sendepulsansteuerung, mit der die Auswertungseinheit 26 das Aussenden des Signals anfordert, ein Grundtakt 32, der dem digitalen Clockmanager 30 zugeführt ist, und das Empfangssignal 18, in dem die Störsignale innerhalb des Ausblendfenster noch vorhanden sind. Der digitale Clockmanager 30 erzeugt auf Basis des Grundtaktes 32 einen ersten Takt 34 mit einer ersten Phase und einen zweiten Takt 36 mit einer zweiten Phase, wobei die zweite Phase hier zu Null gewählt, der zweite Takt also phasengleich zu dem Grundtakt ist.

In einem ersten Taktflankendetektor 38 wird der Sendepuls 14 auf die erste steigende Flanke des mit dem Grundtakt 32 identischen zweiten Taktes 36 hin ausgegeben. Da auch die Sendepulsansteuerung in dem Beispiel der Figur 3 an den Grundtakt gekoppelt ist, wird der Sendepuls 14 sofort ausgegeben.

In einem zweiten Taktflankendetektor 40 wird der Beginn des Ausblendfensters ebenfalls auf die erste auf die Sendepulsansteuerung folgende steigende Flanke des zweiten Taktes 36 gesetzt. Deshalb liegt in dem dargestellten Beispiel das Ausblendfenster stets an dem durch den Sendepuls 14 definierten Beginn des Empfangssignals 18. Das Ausgabesignal des zweiten Taktflankendetektors ist ein Stufensignal, dessen Stufe schon unmittelbar mit dem Sendepuls 14 beginnt.

In einem dritten Taktflankendetektor 42 wird das Ende des Ausblendfensters durch die erste auf die Sendepulsansteuerung folgende Flanke des ersten Taktes 34 bestimmt. Das Ausgabesignal des dritten Taktflankendetektors 42 ist ein Stufensignal, das mit dem Ende des Ausblendfensters ansteigt. Es wird an einem Eingang eines UND-Gatters 44 negiert, so dass nach der UND-Verknüpfung mit dem Ausgabesignal des zweiten Taktflankendetektors 44 ein Rechtecksignal entsteht, das genau dem gewünschten Ausblendsignal 22 entspricht.

Das Ausblendsignal 22 wird am Ausgang des UND-Gatters 44 negiert und dann in einem weiteren UND-Gatter 46 mit dem Empfangssignal 18 verknüpft, so dass gerade der Bereich des Ausblendfensters in dem Empfangssignal 18 ausgeblendet und das von Störsignalen innerhalb des Ausblendfensters befreite ausgeblendete Empfangssignal 24 entsteht.

Der digitale Clockmanager 30 enthält interne Regelungen, beispielsweise auf Basis von PLLs, und ist dadurch gegenüber Änderungen in Prozess, Temperatur und Spannung stabil. Entsprechend können geregelte Takte und damit auch Phasenbeziehungen hoch stabil und mit hoher Präzision ausgegeben werden. Die Taktflankendetektoren 38, 40, 42 sind jeweils auf Basis eines Flipflops implementiert, das wie ein UND-Gatter 44, 46 weitgehend unempfindlich gegen derartige Änderungen der Umgebungsbedingungen ist. Somit können zeitstabile Ausblendfenster auch unter variablen Einsatzbedingungen erzeugt werden. Die Phasenbeziehung kann in dem digitalen Clockmanager 30 dynamisch während des Betriebs verändert werden, womit flexible Ausblendungsmöglichkeiten mit adaptiver Einstellung auf Störer ermöglicht werden.

In der Ausführungsform gemäß den Figuren 2 und 3 ist der Beginn des Ausblendfensters an den Sendepuls 14 gekoppelt. Davon kann in einer weiteren, nicht dargestellten Ausführungsform abgewichen werden, indem der digitale Clockmanager 30 den zweiten Takt 36 wie den ersten Takt 34 gegenüber dem Grundtakt phasenversetzt. Dazu ist dann eine weitere Taktleitung für den Grundtakt zum ersten Taktflankendetektor 38 erforderlich, damit der Sendezeitpunkt tatsächlich von dem Beginn des Ausblendfensters entkoppelt wird. Der Knotenpunkt 48 wird also aufgelöst und der zweite Takt 36 nur noch dem zweiten Taktflankendetektor 40 zugeführt. Auf diese Weise können Ausblendfenster nicht nur in ihrer Länge, sondern auch in ihrer Position frei verändert werden.

## Patentansprüche

1. Messkern (10) für eine Signallaufzeitmessung mit einer Sendereinheit (12) zur Erzeugung eines Sendepulses (14) zu einem Sendezeitpunkt (t₁), einer Empfängereinheit (16) zur Verarbeitung eines Empfangssignals (18) sowie einer Auswertungseinheit (26), die dafür ausgebildet ist, aus dem Empfangssignal (18, 24) einen Empfangszeitpunkt (t₂) und somit die Signallaufzeit (t₂-t₁) zwischen Sendezeitpunkt (t₁) und Empfangszeitpunkt (t₂) zu bestimmen, wobei weiterhin eine Ausblendeinheit (20) vorgesehen ist, um ein zeitliches Ausblendfenster (22) mit einem definierten Zeitbezug zu dem Sendezeitpunkt (t₁) festzulegen und in dem Empfangssignal (18) einen durch das Ausblendfenster (22) bestimmten Teilbereich (t_{S}) des Empfangssignals (18) auszublenden, **dadurch gekennzeichnet,**
**dass** die Ausblendeinheit (20) auf einem digitalen Baustein (28), insbesondere einem FPGA, implementiert ist, der einen digitalen Clockmanager (30) aufweist, in dem Takte (34, 36) mit vorgebbarer Phase erzeugbar sind, und dass die Ausblendeinheit (20) dafür ausgebildet ist, das Ende des Ausblendfensters (22) aus einem anhand des gewünschten Endzeitpunkts (T_{A2}) des Ausblendfensters gegenüber dem Sendezeitpunkt (t₁) phasenverschobenen ersten Takt (34) des digitalen Clockmanagers (30) zu erzeugen.

2. Messkern (10) nach Anspruch 1,
wobei die Ausblendeinheit (20) mindestens einen Taktflankendetektor (38, 40, 42) aufweist, um aus dem ersten Takt (34) ein Ausblendrechtecksignal (22) zu erzeugen, das mit dem Sendezeitpunkt (t₁) beginnt und mit einer Flanke des ersten Taktes (34) endet und so dem Ausblendfenster (22) entspricht.

3. Messkern (10) nach Anspruch 1,
wobei die Ausblendeinheit (20) dafür ausgebildet ist, den Anfang des Ausblendfensters (22) aus einem anhand des gewünschten Startzeitpunkts (T_{A1}) des Ausblendfensters (22) gegenüber dem Sendezeitpunkt (t₁) phasenverschobenen zweiten Takt (36) des digitalen Clockmanagers (30) zu erzeugen.

4. Messkern (10) nach Anspruch 3,
wobei die Ausblendeinheit (20) mindestens einen Taktflankendetektor (38, 40, 42) aufweist, um aus dem ersten Takt (34) und dem zweiten Takt (36) ein Ausblendrechtecksignal (22) zu erzeugen, das mit einer Flanke des zweiten Taktes (36) beginnt und mit einer Flanke des ersten Taktes (34) endet und so dem Ausblendfenster (22) entspricht.

5. Messkern (10) nach Anspruch 3 oder 4,
wobei die Ausblendeinheit (20) ein UND-Gatter (46) aufweist, um das Ausblendrechtecksignal (22) und das Empfangssignal (18) mit einem logischen UND zu verknüpfen und so in dem Empfangssignal (18) den durch das Ausblendfenster (22) bestimmten Teilbereich (t_{S}) auszublenden.

6. Messkern (10) nach Anspruch 2 oder 4,
wobei der Taktflankendetektor (38, 40, 42) mindestens ein Flipflop aufweist

7. Messkern (10) nach einem der vorhergehenden Ansprüche,
wobei der digitale Clockmanager (30) eine Regelung aufweist, insbesondere auf Basis von PLLs, und somit gegenüber Veränderungen in Prozess, Temperatur und/oder Spannung stabile Takte (34, 36) erzeugt.

8. Messkern (10) nach einem der vorhergehenden Ansprüche,
wobei in dem digitalen Clockmanager (30) Takte (34, 36) mit einer hochgenau vorgegebenen Phase insbesondere im Bereich von Pikosekunden erzeugbar sind.

9. Messkern (10) nach einem der vorhergehenden Ansprüche,
wobei auch die Auswertungseinheit (26) auf dem digitalen Baustein (28) implementiert ist.

10. Optoelektronischer Sensor, insbesondere Entfernungstaster oder Laserscanner, mit einem Messkern (10) nach einem der vorhergehenden Ansprüche, oder Mikrowellen-Sensor, insbesondere frei abstrahlender Füllstandssensor nach dem Radarprinzip oder TDR-Füllstandssensor, mit einem Messkern (10) nach einem der vorhergehenden Ansprüche.

11. Verfahren zur Signallaufzeitmessung, bei dem ein Sendepuls (14) zu einem Sendezeitpunkt (t₁) erzeugt und ein zugehöriges Empfangssignal (18) verarbeitet wird, indem aus dem Empfangssignal (18, 24) ein Empfangszeitpunkt (t₂) und somit die Signallaufzeit (t₂-t₁) zwischen Sendezeitpunkt (t₁) und Empfangszeitpunkt (t₂) bestimmt wird, wobei ein zeitliches Ausblendfenster (22) mit einem definierten Zeitbezug zu dem Sendezeitpunkt (t₁) festgelegt und in dem Empfangssignal (18) ein durch das Ausblendfenster (22) bestimmter Teilbereich (t_{S}) des Empfangssignals (18) ausgeblendet wird,
**dadurch gekennzeichnet,**
**dass** die Ausblendung auf einem digitalen Baustein (28), insbesondere einem FPGA, mit einem digitalen Clockmanager (30) zur Erzeugung von Takten (34, 36) vorgebbarer Phasen erfolgt, und dass das Ende des Ausblendfensters (22) aus einem anhand des gewünschten Endzeitpunkts (t_{A2}) des Ausblendfensters (22) gegenüber dem Sendezeitpunkt (t₁) phasenverschobenen ersten Takt (34) des digitalen Clockmanagers (30) erzeugt wird.
